# EUROPEAN PATENT APPLICATION

(11) **EP 4 389 775 A1**
(43) Date of publication of application: **26.06.2024**
(21) Application number: 22214849.6
(22) Date of filing: 20.12.2022
(51) Int. Cl.: C08F 2/00, C08F 2/01, B01J 4/00

(54) **INITIATOR INJECTION LINE FOR HIGH PRESSURE POLYMERIZATION**

(71) Applicant: ExxonMobil Chemical Patents Inc., Baytown, TX 77520-2101 (US)
(72) Inventor: DEWITTE, Cindy, Puurs (BE); VERLUYTEN, Frankie K. R., Hoeselt (BE); LAMMENS, Henri A., Antwerpen (BE)
(74) Representative: ExxonMobil Chemical Europe LLC

(57) **Abstract**

The invention relates to a method of preparing a polymer, preferably polyethylene, in a polymerization reactor system comprising an initiator injection line. The method comprises operating a back-pressure valve of the initiator injection line to maintain a pressure upstream of the back-pressure valve and downstream of an initiator pump. The invention also concerns an initiator injection line comprising a back-pressure valve and a polymerization reactor system comprising said initiator injection line.

## Description

### Field of the Invention

The present invention concerns a method of preparing a polymer in a polymerization reactor system, preferably a polyethylene polymer. More particularly, but not exclusively, the method concerns operating a back-pressure valve of an initiator injection line to maintain a pressure upstream of the back-pressure valve and downstream of an initiator pump. The invention also concerns an initiator injection line comprising a back-pressure valve and a polymerization reactor system comprising said initiator injection line.

### Background of the Invention

High pressure polymerization manufacturing processes require good temperature control. The production of polymers, such as polyethylene (e.g. LDPE), is an exothermic process and therefore generates heat. The temperature within a reactor reaches a peak when initiator is consumed and polymerization discontinues. Cooling is required to maintain the reaction temperatures within safe and desired limits and to reduce the temperature of the reaction mixture to a suitable initiation temperature for contacting with additional initiator in subsequent reaction zones. Heat may be removed from the polymerization reactor using a reactor jacket water system. Additionally, relatively cool side-streams of monomer may be introduced along the length of the reactor in cooling zones located between reaction zones. Multiple initiator injection points may be located along the length of the tubular reactor and used to control the temperature profile of the reactor.

When the temperature generated inside the reactor is not well controlled, the heat generated by polymerization may exceed the cooling capacity of the reactor jacket water system. In such a scenario, the temperature inside the reactor can rapidly increase to an undesirable level. Temperatures exceeding ideal polymerization temperatures can potentially cause undesired reactions such as 'run-away' or `reactor decomposition' reactions.

The properties of the polymer produced in a high pressure polymerization process are influenced by the reactor temperature profile. Therefore, good reactor temperature control is important in achieving desired polymer characteristics.

Initiator, typically an oxygen or organic free-radical initiator, is injected into the reactor system to initiate the polymerization reaction. Typically, a mixture of different organic peroxides with different half-life time temperatures are used in accordance with the desired reaction profile. The organic peroxide (mixture) is diluted in an inert organic solvent for reasons of safety and for easier handling and metering. The initiator (mixture) is injected at one or more points into the reactor to start the polymerization reaction. The injection is usually conducted by a high pressure initiator injection pump. One pump generally provided with one spare pump is used to inject the initiator into a reaction zone through an injection point. The pump output (initiator flow) is controlled by a temperature measured in the reactor (either a single temperature or the temperature from a peak picker in a reaction zone). See, for example, US patent application U.S. Pat. No. 3,628,918 or U.S. Publication No. 2005/0192414, US 2019/0299182 A1, WO 2004/108271, WO 2007/018871, WO 2011/008 197, or WO 2013/154690. Other background references include EP 2 481 477 A and WO 2014/046835.

Under normal operating conditions of the reactor and initiator injection line, conditions within the reactor can be precisely controlled. However, upsets in the initiator/monomer ratio in the reactor may cause temperatures to rise. If left unchecked, elevated temperatures may lead to degradation of products and decomposition of monomer and polymer.

Initiator injection lines are prone to blockage or plugging. A build-up of pressure in the initiator injection line upstream of such a plug may eventually dislodge the blockage which can lead to initiator overdosing into the reactor as built-up initiator is expelled into the reactor. An initiator overdose can result in undesired side-reactions and a rapid increase in temperature within the reactor. Also, initiator injection lines typically use an oscillating pump which leads to small, but significant, changes in flow rate of initiator into the reactor. It is desirable to provide better control on initiator flow rate into a tubular reactor.

Initiator is delivered to high-pressure polymerization tubular reactors in a solvent. Therefore, poorly controlled initiator injection into the reactor may also result in increased solvent injection into the reactor. Solvent may act as a chain transfer agent in the polymerization reaction and may impact the melt index properties of the polymer.

References of potential interest include WO 2017/106,940 A1; US 8,308,087; US 6,384,153; US 2006/0167193 A1, US 8,217,124; WO 2018/127,533 A1; US 4,008,049; US 3,506,715; SU 1,016,303 A; CN 112973575.

The present invention seeks to mitigate the above-mentioned problems. Alternatively or additionally, the present invention seeks to provide an improved initiator injection line, and polymerization methods using said initiator injection line, that provides a smooth and controlled flow rate of initiator to a reactor.

### Summary of the Invention

The present invention provides according to a first aspect, a method of preparing a polymer in a polymerization reactor system, wherein the method is according to claim 1. The polymerization reactor system comprises a tubular reactor. A monomer source, a primary compressor, and a secondary compressor are provided upstream of the tubular reactor. The primary compressor is arranged to receive monomer from the monomer source. The secondary compressor is arranged downstream of the primary compressor. Thus, monomer flows from the monomer source to the primary compressor and from the primary compressor to the secondary compressor. The primary and secondary compressor pressurizes the monomer feed before the monomer is passed into the tubular reactor. A pressure let-down valve is located downstream of the tubular reactor and product mixture discharges the tubular reactor via the pressure let-down valve. The polymerization reactor system further comprises an initiator source. The initiator source is configured to supply initiator to the initiator pump of the initiator injection line. The initiator source may be located upstream of an initiator injection line. Alternatively, the initiator source may be located within the initiator injection line, for example adjacent the pump. As explained herein, an outlet of the initiator injection line is connected to the tubular reactor at an initiator injection point. The initiator injection line provides initiator to the initiator injection point of the tubular reactor.

Preferably, the polymerization reactor system is a high-pressure polymerization reactor system. The tubular reactor may be a high pressure tubular reactor that is operational at pressures exceeding 1000 bar, optionally pressures exceeding 2500 bar, for example pressures in the range of from 2800 bar to 3200 bar. The pressure at which the tubular reactor is operated may be referred to as the operational pressure. The tubular reactor may operate at temperatures in the range of from 150 °C to 400 °C, for example from 200 °C to 300 °C. The monomer is passed through the primary and secondary compressor so that the monomer is pressurised or compressed to a pressure of at least 1000 bar, for example 2000 bar, optionally to the reactor pressure. After passing through the primary and secondary compressor, the monomer is introduced into the tubular reactor wherein the monomer undergoes a polymerization reaction.

Optionally, the tubular reactor is for high pressure polymerization of a monomer and a comonomer. When the method comprises polymerizing a monomer, preferably ethylene, with a comonomer, the polymerization reactor further comprises a comonomer source and the method comprises introducing comonomer into the tubular reactor.

The initiator injection line comprises an initiator pump and an outlet located downstream of the pump. The outlet is connected to the tubular reactor at an initiator injection point. The outlet allows initiator to flow from the initiator injection line into the reactor at the initiator injection point. The outlet may be in the form of a sparger. The pump is configured to pump initiator from the initiator source (such as a storage tank for holding initiator) through the outlet and into the tubular reactor at the initiator injection point. The initiator pump may be an oscillating pump. The initiator pump may be a hydraulic piston pump. Total output of the initiator pump may be controlled to meet the desired reactor temperature profile. To obtain a stable initiator supply, the initiator pump should be operated at its optimal output range. A too low pump output for instance, can result in initiator injection instabilities (pressure pulsations) and subsequent reactor temperature fluctuations. The initiator concentration in the initiator mix is selected such that the pump is operated in the desired output range.

The initiator injection line further comprises a back-pressure valve located downstream of the initiator pump and upstream of the outlet. The back-pressure valve has a set-pressure and is configured to maintain a pressure within the initiator injection line upstream of the back-pressure valve and downstream of the initiator pump that is equal to the set-pressure.

The method according to the first aspect of the invention comprises the steps of:
(i) pressurizing monomer from the monomer source in the primary and secondary compressors and introducing the monomer into the tubular reactor;
(ii) operating the initiator pump so that initiator from the initiator source flows through the back-pressure valve and into the tubular reactor at the initiator injection point;
(iii) polymerizing the monomer in the tubular reactor to form the polymer;
(iv) discharging a product mixture comprising the polymer and unreacted monomer from the tubular reactor through the pressure let-down valve; and,
(v) isolating the polymer;,
wherein step (ii) further comprises operating the back-pressure valve at the set-pressure, wherein the set-pressure is in the range of from 50 bar to 400 bar greater than the pressure of the tubular reactor at the initiator injection point.

It will be understood that reference to the pressure of the tubular reactor refers to the operational pressure of the tubular reactor. The set-pressure is therefore directly related to the operational pressure of the tubular reactor. The operational pressure of the reactor is in the region of 1000 bar to 3500 bar. The pressure within the tubular reactor, for example at the initiator injection point, may fluctuate within acceptable limits of the operational pressure during the course of the reaction. The set-pressure is not adjusted in response to such fluctuations. However, if the operational pressure of the tubular reactor is adjusted, for example to produce a particular polymer grade, the set-pressure may be adjusted in dependence on the new operational pressure.

Optionally, the method of preparing a polymer according to the first aspect of the invention is a continuous process. In a continuous process, two or more of method steps (i) to (v) are performed simultaneously. Preferably, all method steps (i) to (v) are performed simultaneously.

Initiator is injected into the tubular reactor to initiate the polymerization reaction. The initiator is supplied to the initiator injection point(s) in the tubular reactor using at least one initiator injection line according to the present invention

The product mixture comprises a polymer and optionally unreacted monomer. The product mixture may further comprise unreacted comonomer if comonomer was added to the reaction mixture. The polymer mixture is discharged from the polymer and the polymer is isolated from the mixture, for example by passing the product mixture through at least one separation vessel.

The back-pressure valve of the initiator injection line is a variable pressure regulating valve or control valve that regulates the pressure upstream of the valve. The back-pressure valve may be used to create a higher pressure upstream of the valve by restricting flow of initiator through an opening in the valve. Optionally, the back-pressure valve has an adjustable opening for controlling the pressure upstream of the back-pressure valve. The size of the opening of the valve may be continually adjusted to regulate the pressure upstream of the back-pressure valve so that the upstream pressure is maintained at the set-pressure. The set pressure of the back-pressure valve is in the range of from 50 bar to 400 bar greater than the pressure of the tubular reactor at the initiator injection point. For example, the set-pressure may be 200 bar greater than the pressure of the tubular reactor at the initiator injection point.

In operation, the back-pressure valve maintains the pressure in the initiator injection line upstream of the back-pressure valve at the set-pressure by varying the flow of initiator through the opening of the back-pressure valve. If the pressure upstream of the valve exceeds the set-pressure, the opening of the back-pressure valve is widened to reduce the upstream pressure. If the pressure upstream of the valve falls below the set-pressure, the opening of the back-pressure valve is narrowed to increase the upstream pressure. The set-pressure of the valve may be adjustable, for example if the operational pressure of the tubular reactor is adjusted. Different polymerization processes require different polymerization conditions (e.g. different operational pressure and temperature) of the tubular reactor. The set-pressure of back-pressure valve may be adjusted in dependence on the operation pressure of the reactor. It will be understood that the back-pressure valve maintains the pressure upstream of the valve to within acceptable limits of the set-pressure. For example, to within 20 bar of the set-pressure, or within 10 bar of the set-pressure.

The back-pressure valve may smooth the pulsing output inherent to the initiator pump (such as an oscillating pump). As explained above, the back-pressure valve maintains a pressure in the initiator injection line upstream of the back-pressure valve that is higher than the pressure downstream of the valve. The initiator is slightly compressed between the initiator pump and the back-pressure valve. The compressed initiator acts as a capacitance in the system. When the pump output dips momentarily, for example when the pump cylinder reaches the end of its stroke and changes direction, the compressed initiator expands slightly, making up for the loss in pump output. This ultimately results in a more constant and consistent flow rate of initiator into the tubular reactor. As the initiator concentration in the reactor controls the temperature within the reactor, more stable peak reactor temperatures may be achieved using the present initiator injection line.

The size of an opening of the back-pressure valve may be adjusted, preferably continually adjusted, to control the pressure upstream of the back-pressure valve. The size of the opening of the back-pressure valve may be adjusted, for example, by a plug. The plug may be a tapered plug wherein insertion of the plug into the opening closes the opening. As the plug is tapered, the opening will not be fully closed until the diameter of the plug that is equal to the diameter of the opening has been inserted into the opening of the back-pressure valve. This allows fine control of the size of the opening, and thus pressure regulation upstream of the valve. It will be understood that the diameter of the opening itself is not adjusted, but the opening is obstructed by the plug. Alternatively, in another embodiment, the diameter of the opening may be adjusted to alter the size of the opening of the back-pressure valve.

The set-pressure of the back-pressure valve is in the range of from 50 bar to 400 bar greater than the pressure inside the tubular reactor at the initiator injection point. Optionally, the set-pressure is in the range of from 100 bar to 350 bar, or from 150 bar to 300 bar, 200 bar to 300 bar, or 225 to 275 bar greater than the pressure inside the tubular reactor at the initiator injection point. It may be that such a pressure differential allows a smooth initiator output from the initiator injection line.

The optimum set-pressure may be determined through empirical testing of the reactor system, but will be in the range of from 50 bar to 400 bar greater than the reactor pressure at the initiator injection point. The back-pressure valve may initially be set to an arbitrary set-pressure, for example a set-pressure in the range of from 200 bar to 275 bar greater than the reactor pressure at the initiator injection point. The output of the initiator injection line may then be monitored to assess the flow rate of initiator into the reactor. The set-pressure may be adjusted in accordance with the output of the initiator injection line. For example, if the output oscillates, the set-pressure may be increased, for example in 20 bar increments, until the monitored output no longer oscillates, or is at least reduced. Conversely, if the flow rate of initiator out of the initiator injection line is inadequate, the set-pressure may be reduced, for example in 20 bar increments, until the monitored flow rate of initiator into the initiator injection line reaches an optimal value.

Optionally, the polymerization reactor system further comprises a control system configured to reduce the flow rate of the initiator through the outlet and thus into the tubular reactor at the initiator injection point when the pressure in the initiator injection line between the initiator pump and the back-pressure valve is equal to a first set-point pressure. The first set-point pressure is a pressure within the range of from 100 bar to 200 bar greater than the set-pressure of the back-pressure valve. The first set-point pressure may be chosen in accordance with the specific reactor set-up, such as the operational pressure of the reactor. The control system may control the output of the pump in order to control the flow rate of initiator through the outlet. Additionally or alternatively, the control system may control one or more valves downstream of the initiator pump to control the flow rate of the initiator through the outlet. The initiator injection line may comprise one or more pressure probes configured to measure the pressure inside the initiator injection line. The pressure measured by the pressure probe may be converted into an analog signal for input into the control system. Preferably, at least one pressure probe is located in the initiator injection line upstream of the back-pressure valve and downstream of the initiator pump so that the pressure inside the initiator injection line between the initiator pump and the back-pressure valve may be monitored using the at least one pressure probe. The at least one pressure probe may be a pressure transmitter for measuring an incoming pressure and converting it to an analogue signal for system control. Suitable pressure transmitters are known to the skilled person. Blockages or plugs of initiator may form in the initiator injection line. The back-pressure valve is particularly vulnerable to blockage because the opening of the valve is typically the narrowest part of the initiator injection line. A reduction in the flow rate of the initiator through the outlet minimises further build-up of initiator upstream of the plug. It may also lessen the risk of initiator overdosing into the reactor. Optionally, the control system comprises an alarm system that may alert the operator through visual or audible cues that the pressure within the initiator injection line is equal to the first setpoint pressure, and thus there may be a blockage within the initiator injection line. For example, the alarm system may trigger an audible alarm such as a siren when the pressure in the initiator injection line between the initiator pump and the back-pressure valve is equal to the first setpoint pressure, and/or a warning message may be produced in a graphical user interface of a computer (such as a Human-machine interface (HMI) or control consoles connected to the control system).

The control system may be a Distributed Control System (DCS). As used herein, Distributed Control System (DCS) refers to a control system for a process or plant, wherein control elements are distributed throughout the system. A DCS typically uses custom designed processors as controllers and uses both proprietary interconnections and standard communications protocol for communication. Input and output modules form component parts of the DCS. The processor receives information from input modules and sends information to output modules. The input modules receive information from input instruments in the process (or field) and the output modules transmit instructions to the output instruments in the field. The inputs and outputs can be either analog signal which are continuously changing or discrete signals which are two state either on or off. Computer buses or electrical buses connect the processor and modules through multiplexer or demultiplexers. Buses also connect the distributed controllers with the central controller and finally to the Human-machine interface (HMI) or control consoles. DCSs are used to control manufacturing processes that are continuous or batch-oriented. DCSs are connected to sensors, such as pressure probes, and actuators, such as valves, and use setpoint control to control the flow of material through the plant. One of the most common examples is a setpoint control loop consisting of a pressure sensor, controller, and control valve. Pressure or flow measurements are transmitted to the controller, usually through the aid of a signal conditioning input/output (I/O) device. When the measured variable reaches a certain point, the controller instructs a valve or actuation device to open or close until the fluidic flow process reaches the desired set-point. A typical DCS consists of functionally and/or geographically distributed digital controllers capable of executing from 1 to 256 or more regulatory control loops in one control box. The input/output devices (I/O) can be integral with the controller or located remotely via a field network. Today's controllers have extensive computational capabilities and, in addition to proportional, integral, and derivative (PID) control, can generally perform logic and sequential control. DCSs are usually designed with redundant processors to enhance the reliability of the control system. Most systems come with displays and configuration software that enable the end-user (the operator) to configure the control system without the need for performing low-level programming. DCSs may employ one or more workstations and can be configured at the workstation or by an offline personal computer. Local communication is handled by a control network with transmission over twisted-pair, coaxial, or fiber-optic cable. A server and/or applications processor may be included in the system for extra computational, data collection, and reporting capability.

Optionally, the initiator injection line may further comprise a shut-off valve located upstream of the outlet and downstream of the back-pressure valve. The control system may be configured to close the shut-off valve when the pressure in the initiator injection line between the initiator pump and the back-pressure valve equals a second set-point pressure, wherein the second set-point pressure is a pressure within the range of from 200 bar to 600 bar greater than the set-pressure of the back-pressure valve. Thus, when the pressure within the tubular reactor upstream of the of the back-pressure valve and downstream of the pump exceeds the first setpoint pressure and equals the higher, second set-point pressure, the control system closes the shut-off valve so that initiator is prevented from entering the tubular reactor at the initiator injection point. This may prevent over-dosing of initiator into the tubular reactor. For example, a potential overdosing scenario may occur when a plug is initially formed within the initiator injection line, for example at the back-pressure valve, and then the blockage is subsequently released as a result of increasing pressure behind the plug. This would result in initiator overdosing into the reactor if the shut-off valve were not closed. The second set-point pressure is dependent on the reactor specifics and will be less than the rupture disc settings. The initiator injection line may comprise at least one additional shut-off valve located upstream of the above mentioned shut-off valve. The at least one additional shut-off valve may be used to isolate a section of the initiator injection line.

Optionally, the initiator injection line further comprises a dump valve located upstream of the back-pressure valve. The initiator injection line may also comprise a waste tank in fluid communication with the dump valve. Optionally, the control system is configured to open the dump valve to divert initiator to the waste tank when the pressure in the initiator injection line between the initiator pump and the back-pressure valve equals the second set-point pressure. Thus, initiator in the initiator injection line may be diverted to the waste tank by opening of the dump valve. This allows initiator to escape the initiator injection line once the shut-off valve has been closed. In normal operation, the dump valve is closed. The dump valve is preferably opened after the shut-off valve is closed. This prevents back-flow of initiator or reaction mixture from the reactor via the initiator injection point. Back-flow could cause a blockage, for example, in the sparger or back-pressure valve. Optionally, to minimise or eliminate back-flow from the reactor, the dump valve is opened no less than 1 second after the shut-off valve is closed, for example no less than 2 seconds, no less than 5 seconds or no less than 10 second after the shut-off valve is closed. Optionally, the dump valve is opened no more than 2 minutes, no more than 1 minute, or no more than 30 seconds after the shut-off valve is closed. For example, the dump valve may be opened at a point in time within the range of from 1 second and 30 seconds after the shut-off valve is closed. The shut-off valve may also be closed when initiator supply to the reactor is stopped to prevent back-flow of reaction mixture (gas and polymer) into the initiator injection system.

As disclosed herein, the tubular reactor may comprise multiple initiator injection points distributed along the length of the reactor. Each initiator injection point defines the start of a reaction zone. It will be understood that herein the term 'multiple' means two or more. The initiator injection points are supplied by at least one initiator injection line according to the present invention. It may be that a single initiator injection line supplies all, or the majority of, the initiator injection points. It will be understood that if an initiator injection line supplies more than one initiator injection point, the initiator injection line will comprise more than one outlet. Each outlet may be paired with an initiator injection point so that the initiator injection point is connected to no more than one outlet. It may be that the initiator injection line comprises branching conduits located downstream of the back-pressure valve. After initiator has passed through the back-pressure valve the feed stream may be split into several fractions by the branching conduits. Each fraction then proceeds down a single conduit to an outlet and into the reactor at a single initiator injection point. In this way, initiator may be supplied to multiple initiator injection points. Thus, optionally, the initiator injection line has multiple outlets and the tubular reactor comprises multiple initiator injection points, and each of the multiple outlets of the initiator injection line are connected any one of the multiple initiator injection points provided that each of the multiple initiator injection points is connected to no more than one of the multiple outlets; and, wherein step (ii) of the method comprises operating the initiator pump so that initiator from the initiator source flows through the back-pressure valve and into the tubular reactor at the multiple initiator injection points. Each outlet is connected to no more than one initiator injection point.

The polymerization reaction system may comprise two or more initiator injection lines according to the present invention. Optionally, when the initiator source is located upstream of the initiator line, at least two of the two or more initiator injection lines may be supplied by the same initiator source. Optionally, the polymerization reaction system comprises two or more initiator sources, with each initiator source supplying only a proportion, preferably only one, of the two or more initiator injection lines. The initiator sources may be located upstream of the initiator injection line, or within the initiator injection line, for example downstream of the initiator pump. Each initiator source may comprise a different initiator mixture so that each of the two or more initiator injection lines supply a different initiator mixture to the initiator inject point(s).

Optionally, a cooling zone is located downstream of at least one reaction zone. The cooling zone is a region of the tubular reactor where the temperature of the reaction mixture comprising polymer, and optionally monomer and optionally comonomer is reduced before the reaction mixture enters an additional reaction zone or leaves the reactor. Optionally, the tubular reactor comprises multiple reaction zones interspaced with cooling zones.

Optionally, the polymerization reactor system further comprises an autoclave reactor upstream of the tubular reactor, and the tubular reactor is a tubular tail reactor configured to receive an outlet stream from the autoclave reactor, wherein the outlet stream comprises a polymer and unreacted monomer. It will be understood that following polymerization in an autoclave reactor the outlet stream discharged from the autoclave reactor comprises a mixture of polymer and unreacted monomer. If a comonomer was present in the autoclave reaction mixture, the outlet stream may also comprise unreacted comonomer. It will be understood that unreacted monomer and unreacted comonomer is (co)-monomer that has been exposed to polymerization conditions in a reactor but has not undergone a polymerization reaction. The tubular tail reactor is configured to receive unreacted monomer in the outlet stream of an autoclave reactor and to polymerise the unreacted monomer. Suitable tubular tail reactors are known to the person skilled in the art. Optionally, multiple tubular tail reactors may be arranged in series. Initiator is injected into the tubular tail reactor to initiate a polymerisation reaction. Optionally, fresh monomer and/or comonomer is injected into the tubular tail reactor in addition to the outlet stream.

Preferably, the monomer is ethylene and the polymer is polyethylene polymer. If ethylene is the only monomer present, the polyethylene polymer will be a polyethylene homopolymer. For example, the polyethylene may be a LDPE. Optionally, a comonomer may be used in the polymerization reaction and the resulting polyethylene polymer may be a copolymer of ethylene and the comonomer.

According to a second aspect of the invention there is also provided an initiator injection line for use in the method according to the first aspect of the invention. It will be understood that the initiator injection line of the second aspect of the invention may comprise any feature described in relation to the first aspect of the invention. The back-pressure valve of the initiator injection line has an adjustable opening for controlling the pressure upstream of the back-pressure valve. The size of the opening is adjustable to maintain the pressure in the initiator injection line upstream of the back-pressure valve and downstream of the initiator pump equal to the set-pressure of the back-pressure valve. Adjusting the opening allows the back-pressure valve to maintain a pressure upstream of the valve at the set-pressure. The back-pressure valve is a control valve and suitable back-pressure valves are known to the skilled person.

Optionally, the outlet of the initiator injection line may be in the form of a sparger. The sparger allows efficient mixing of the initiator in the reaction mixture within the reactor.

Optionally, the initiator injection line further comprises at least one check valve located upstream of the initiator injection outlet and downstream of the back-pressure valve. The initiator injection line may comprise multiple check valves, for example 2 check valves. Optionally, the at least one check valve is located no more than 1000 mm upstream of the outlet, such as no more than 500 mm or no more than 200 mm upstream of the outlet. The at least one check prevents back-flow into the initiator injection line. A sudden pressure drop may be experience in the initiator injection line if a blockage occurs. The check valve prevents back-flow of initiator and/or reaction mixture towards the back-pressure valve. Suitable check valves are known to the skilled person.

Optionally, the initiator injection line further comprises a three-way valve located downstream of the back-pressure valve and upstream of the outlet. Suitable three-way valves are well-known to the skilled person and comprise a first port for receiving initiator, a second port for directing initiator to the outlet, and a third port connected to a waste tank. The three-way valve is operable in a first configuration in which the direction of flow is from the first port to the second port, and a second configuration in which the direction of flow is from the first port to the third port. The three-way valve allows, in the first configuration, initiator to flow from the initiator pump, through the initiator injection line to the initiator injection point in the reactor. In the second configuration, initiator flow may be diverted to a waste tank. The waste tank may be the waste tank in fluid communication with the dump valve. The three-way valve may allow the initiator line to be washed with solvent, for example to remove a blockage, particularly when the three-way valve is in the second configuration. The three-way valve may allow the initiator injection line to be flushed with solvent prior to or after initiator is passed through the line. It will be understood that the three-way valve may alternatively be two single valves configured to aid flushing of the line in the same way as a three-way valve. One of the two single valves is configured to control flow from the initiator source to the outlet and may be used to isolate the initiator injection line from the tubular reactor. The second of the two single valves allows the initiator injection line to be flushed. It may be that solvent is injected into the initiator injection line prior to initiator mixture being passed through the line. For example, at reactor start up, it may be desirable to pass a minimal flow of solvent to the reactor initiator injector point prior to initiator injection to confirm that no plugging is in place prior to start-up, and optionally to apply minimum solvent flow to keep the injection point open when initiator injection not yet started. Similarly, at reactor shut-down, it may be desirable to pass a minimal flow of solvent to the reactor initiator injector point after initiator injection. This may help to prevent plugging in the initiator injection line, for example in the sparger. Suitable solvents include, but are not limited to, isododecane, Isopar^{™}.

The initiator injection line may have a total length of at least 6 m, at least 10 m, at least 20 m, at least 50 m or at least 100 m. The initiator injection line may have a total length of no more than 200 m, no more than 140 m, or no more than 100 m. The initiator injection line may have a total length in the range of from 6 m to 200 m. The length of the initiator injection line is measured from the initiator pump to the initiator outlet along the initiator flow pathway. The initiator injection line may have an internal diameter in the range of from 1mm to 10 mm, optionally in the range of from 1 mm and 3 mm, for example 2 mm.

Optionally, the initiator pump is in the range of from 5 m to 100 m upstream of the back-pressure valve. Optionally, the initiator pump is in the range of from 10 m to 50 m upstream of the back-pressure valve. Optionally, the initiator pump is at least 2 m, at least 5 m, or at least 10 m upstream of the back-pressure valve. Optionally, the initiator pump is no more than 100 m, no more than 75 m or no more than 50 m, or no more than 30 m upstream of the back-pressure valve.

Optionally, the outlet is in the range of from 1 m to 100 m downstream of the back-pressure valve. Optionally, the outlet is in the range of from 5 m to 40 m downstream of the back-pressure valve. Optionally, the outlet is at least 1 m, or at least 2 m, or at least 5 m downstream of the back-pressure valve. Optionally the outlet is no more than 100 m, no more than 70 m, no more than 40 m, no more than 10 m, or no more than 5 m downstream of the back-pressure valve.

According to a third aspect of the invention is provided a polymerization reactor system comprising the initiator injection line according to the second aspect of the invention. The polymerization reactor system is suitable for use in the method according to the first aspect of the invention. Preferably, the polymerization reactor system is for high pressure polymerization of ethylene to polyethylene.

Optionally, the polymerization reactor system further comprises at least one autoclave reactor upstream of the tubular reactor, and wherein the tubular reactor is a tubular tail reactor configured to receive an outlet stream comprising polymer and unreacted monomer from the autoclave reactor. When the polymerization reactor system further comprises at least one autoclave reactor, the tubular reactor is a tubular tail reactor configured to receive an outlet stream comprising polymer, unreacted monomer and optionally unreacted comonomer from the autoclave reactor. The outlet stream of the autoclave reactor is routed to the inlet of the tubular reactor. The polymerization reactor may comprise multiple autoclave reactors, for example at least two or at least three autoclave reactors. The polymerization reactor may comprise multiple tubular tail reactors, for example at least two or at least three tubular tail reactors. Optionally, at least one cooling zone is located between the autoclave reactor and tubular tail reactor. The cooling zone may comprise a cooler that lowers the temperature of the outlet stream of the autoclave to the desired inlet temperature for the tubular tail reactor. Optionally, no further monomer or optional comonomer is introduced into the outlet stream so that fresh monomer and optional fresh comonomer if present is not introduced into the tubular tail reactor. Alternatively, additional (fresh) monomer, and optionally additional (fresh) comonomer is introduced into the into the tubular tail reactor in addition to the unreacted monomer, and optional unreacted comonomer present in the outlet stream of the autoclave reactor. The fresh monomer and optional comonomer may be added to the outlet stream. Additionally or alternatively, the fresh monomer and optional comonomer may be introduced directly into the tubular tail reactor in a side stream. Initiator is introduced into the tubular tail reactor to initiate the polymerization reaction. The composition of the initiator solution introduced into the tubular reactor may be different to the initiator solution introduced into the autoclave reactor.

It will of course be appreciated that features described in relation to one aspect of the present invention may be incorporated into other aspects of the present invention. For example, the method of the invention may incorporate any of the features described with reference to the apparatus and system of the invention and *vice versa.*

### Description of the Drawings

Embodiments of the present invention will now be described by way of example only with reference to the accompanying drawings of which:
FIG. 1 is a schematic of a polymerization reactor system utilizing a tubular reactor having at least three reaction zones in accordance with the present disclosure;
FIG. 2 is a schematic of an initiator injection line according to the present invention. A back-pressure valve is located downstream of an initiator pump and upstream of an outlet. The back-pressure valve maintains a pressure upstream of the valve; and,
FIG. 3 is a flow chart of the steps of a method of preparing a polymer in a polymerization reactor system according to the present invention.

### Detailed Description

### Polymerization Reactor System

As referred to herein, "high pressure polymerization" refers to a highly exothermic polymerization reaction that is performed in reactors, such as tubular reactors, under high reactor operating pressures, for example the reactor operating pressure in a high pressure polymerization process may be at least 1000 bar (100 MPa), or at least 2000 bar (200 MPa), or at least 3000 bar (300 MPa).

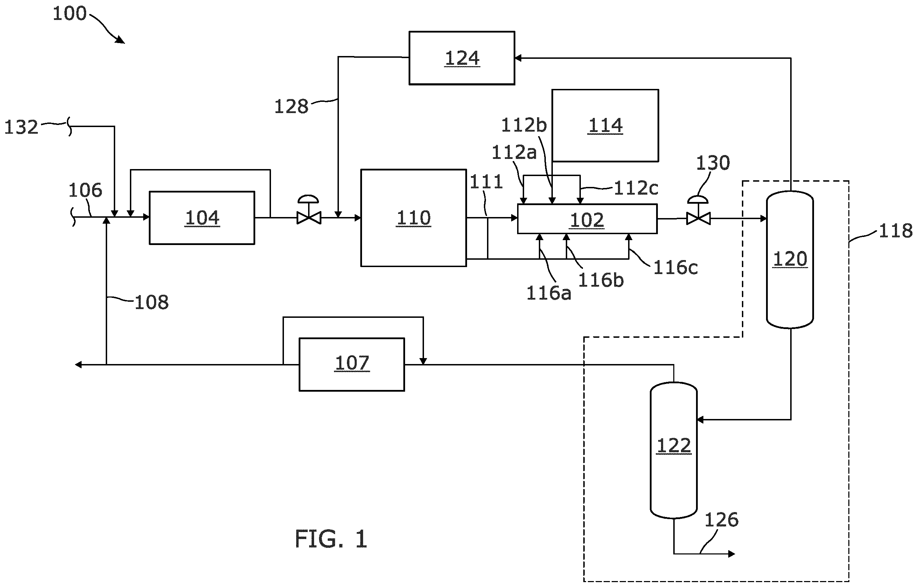

Features of the polymerization reactor system according to the present invention will be discussed with reference to FIG. 1. Preferably, the polymerization reactor system is for polymerizing ethylene. The polymerization reactor system comprises a tubular reactor 102. The tubular reactor 102 has a length in the range of from about 200 metres to about 5,000 metres. The tubular reactor 102 has a internal diameter in the range of from about 20 mm to about 120 mm. It will be understood that the length and diameter of the tubular reactor may be selected depending on the desired heat removal capacity, throughput and amount of turbulent flow necessary.

A primary compressor 104 is in fluid communication with the tubular reactor 102 and in fluid communication with a monomer source (not shown) (preferably an ethylene source) via an intake conduit 106. The intake pressure of the primary compressor 104 may be in the range of from about 15 bar to about 100 bar. The primary compressor 104 increases the pressure of the monomer to be in the range of from about 250 bar to about 350 bar. The primary compressor 104 may be a single compressor that alone pressurizes the monomer to the pressure of a recycle stream, or it may be two or more compressors in series or in parallel that, in combination, pressurize the fresh monomer to the pressure of the monomer recycle system. In addition to fresh monomer, the primary compressor 104 may receive monomer, preferably ethylene, recycled from various units including a product separation unit and/or from primary and secondary compressor leakage systems, where available. The primary compressor 104 may be in fluid communication with a purge gas compressor 107 via a recycle conduit 108 for recycled monomer from the purge gas compressor 107. The primary compressor 104 pressurizes monomer to the pressure of the ethylene recycle system 124.

Monomer, preferably ethylene, discharged from the primary compressor 104 may be divided into two streams, one stream being combined with recycled monomer and discharged into the suction of the secondary compressor 110, and the other stream (not shown) may be injected into the monomer/polymer mixture downstream of the high-pressure, let-down valve, thereby providing rapid cooling of the monomer/polymer mixture prior to entry into the product separation unit 118. The primary compressor 104 has a discharge pressure that is substantially equal to the pressure of the high pressure monomer recycle system and may be, for example, in the range between about 240 bar to about 350 bar, optionally in the range between about 280 bar to about 320 bar.

A secondary compressor 110 upstream of the tubular reactor 102 is in fluid communication with the primary compressor 104. Monomer is cooled upon discharge from the primary compressor 104 and prior to intake into the secondary compressor 110. The secondary compressor 110 compresses the monomer to a pressure of at least 1,000 bar for supply to the tubular reactor 102. The pressure may be in the range of from 1,000 bar to about 3,500 bar, optionally in the range of from about 2,000 bar to about 3,500 bar. Operation at pressures higher than 3,100 bar may be feasible, and may enhance conversion of monomer, but operation at such high pressures may increase costs. The skilled person will select an appropriate pressure depending on the operational configuration and desired polymer properties. Similar to the primary compressor 104, the secondary compressor 110 may be driven by a single motor, or alternatively comprise two or more compressors in series or in parallel driven by separate motors. It is to be understood that the compressors may be in any configuration provided said configuration is adapted to compress the monomer from the intermediate pressure (of the monomer as it leaves the primary compressor 104) to the desired reactor pressure, for example, between about 1,000 bar to about 3,100 bar. The primary compressor 104 may operate at a gas throughput in the range of, for example, from 30 tonnes/hour to 120 tonnes/hour ("T/h"), in the range of from 50 to 100 tonnes/hour and in the range of from 40 to 90 tonnes/hour. It will be understood that the relative capacities of the compressors are immaterial to the present polymerization processes.

Monomer, preferably ethylene, is discharged into the tubular reactor 102 via conduit 111 and heated to at least about 95°C, at least about 135°C, or at least about 160°C in order to promote the decomposition of the initiator and start the polymerization reaction. The initiator is injected into the tubular reactor 102 at least one initiator injection point. Preferably, the reactor 102 comprises multiple initiator injection points, for example at least three different initiator injection points 112a, 112b, 112c along the length of the tubular reactor 102. Each initiator injection point defines a reaction zone. Thus, the reactor 102 of FIG. 1 comprises three reaction zones. It will be understood that the tubular reactor according to the present invention may have one reaction zone, or multiple reaction zones. Initiator may be transferred from the initiator source 114 to the initiator injection points 112a, 112b, 112c via at least one initiator injection line (not shown). The at least one initiator injection line is according to the present invention and may have any feature disclosed herein.

For large tubular reactors, monomer may be discharged from the secondary compressor 110 via two or more discharge streams through conduits with one stream entering a front end of the tubular reactor 102 and the other stream(s) entering as side-stream(s) 116a, 116b, 116c spaced lengthwise along the tubular reactor 102. As shown in FIG.1, the plurality of monomer feed locations 116a, 116b, 116c may comprises at least three monomer feed locations. However, depending on the polymerization process, the tubular reactor 102 may have at least one, at least three, at least five or at least ten monomer feed locations. As shown in FIG. 1, monomer may be fed into the plurality of monomer feed locations 116a, 116b, 116c on tubular reactor 102 from multiple conduits connected to the secondary compressor 110. Before discharging into the tubular reactor 102, monomer side-streams may be cooled, for example, to between 10°C and 20°C in order to reduce the temperature of the reaction mixture. As described herein, the total conversion of monomer to polymer along the length of the reactor is, in practice, limited by the ability to cool the reaction mixture, and so cooling sidestreams can allow an increase in conversion for a given tubular reactor. If comonomer is present in the polymerization process, comonomer may be introduced into the tubular reactor as part of the monomer feed. Alternatively, the comonomer may be introduced into the tubular reactor in a different feed to the monomer.

As also shown in FIG. 1, multiple free-radical initiator injection points (as shown in FIG. 1, three free-radical initiator points 112a, 112b, 112c) are also spaced lengthwise of the tubular reactor 102 to cause polymerization of monomer into polymer in at least three reaction zones. Monomer may be converted into polymer in at least three, or at least six reaction zones or more. Tubular reactors 102 comprising three reaction zones include a first reaction zone, a second reaction zone and a third reaction zone. Tubular reactors 102 comprising six reaction zones include a first reaction zone, a second reaction zone, a third reaction zone, a fourth reaction zone, a fifth reaction zone, and a sixth reaction zone. In the case of six reaction zones, six monomer feed locations may be spaced lengthwise along tubular reactor 102 (e.g., 2 feed locations in addition to the 3 locations 116a, 116b, and 116c shown in FIG. 1); and similarly, six free-radical initiator injection points (e.g., 2 free-radical initiator positions in addition to the 3 points 112a, 112b, 112c shown in FIG. 1) are also spaced lengthwise of the reactor 102. Initiators may be oxygen, peroxides and similar agents. Suitable initiators are described herein.

Each initiator injection point 112 is associated with a reaction zone. Injection of initiator into the tubular reactor 102 causes an exothermic temperature rise that is removed by a cooling at the reaction zone and downstream of that reaction zone. The cooling takes place through the tube wall, optionally aided by a cooling liquid as a heat transfer medium and/or by a feed of cold monomer that is added downstream. Further, initiator may be added downstream to form another reaction zone for converting additional monomer into polymer. Thus, as the reaction mixture travels along the length of the tubular reactor, the temperature of the reaction mixture increases to a peak and then decreases until the next initiator injection position is reached, whereupon the process begins again. A reaction zone downstream of an initiator injection point in which the polymerization reaction occurs is known as "the reaction zone." The tubular reactor 102 is generally equipped with at least one temperature regulated heating/cooling jacket in each reaction zone. A cooling zone (not shown) may be present after each reaction zone. The cooling zones are provided to lower the temperature of the reaction mixture before the reaction mixture enters the next reaction zone or exits the reactor. The cooling zone may be provided with a cooling jacket to control the temperature of the cooling zone. Additionally or alternatively, cool monomer may be injected into the tubular reactor at a cooling zone to lower the temperature of the reaction mixture in the cooling zone.

Polymerization commences immediately downstream of the first reaction zone thereby causing the temperature of the reaction mixture to rise due to the exothermic nature of the polymerization. As the temperature rises, initiator decomposition and polymerization increase in rate, accelerating the heat generation and causing the temperature to rise further. As initiator is consumed, initiation and polymerization slow and, at the point where heat generation equals heat conducted away from the reaction mixture, the temperature peaks and then begins to fall.

In each reaction zone, monomer, preferably ethylene, is converted to polymer and, therefore, having a larger number of reaction zones will generally increase conversion. However, each reaction zone will typically necessitate increasing the length of the tubular reactor and, therefore, will increase the pressure drop across the reactor. In the present processes, initiator may be fed from an initiator source 114 comprising one or more tanks of initiator and injected at multiple initiator injection points such as at least 4, 5, or 6 different points along the tubular reactor 102 thereby giving rise to at least 4, 5, or 6 different reaction zones. Generally, peak temperatures for a reaction zone may be in the range of from about 170°C to about 350°C.

Polymer compositions produced by polymerization processing in the tubular reactor 102 may be discharged directly into a separation unit 118 or to a product cooler (not shown). For example, as shown in FIG. 1, mixture of polymer and unreacted monomer, and optionally unreacted comonomer, discharges to a separation unit 118. As shown in FIG. 1, the separation unit 118 comprises a high pressure separator 120 and a low pressure separator 122. Product separation, however, may be carried out in a single stage, if desired. As shown in FIG. 1, for multiple stage separations, in a first stage, polymer is separated from unreacted monomer such as ethylene. Unreacted ethylene gas may be fed to a high pressure recycle gas system 124. In a second stage, molten polymer is decompressed and separated ethylene gas may flow to a purge gas compression system 107. The pressure in the last stage of the separator unit 118 (or in the low pressure separator 122) is in the range of from about 1 bar to about 10 bar, or from about 1 bar to about 3 bar.

As shown in FIG. 1, the high pressure separator 120 receives monomer/polymer mixture discharged from the tubular reactor 102. The high pressure separator 120 operates in the range of from about 200 bar to about 350 bar. The high pressure separator 120 is connected to a low pressure separator 122 for further monomer removal. Molten polymer is discharged from the low pressure separator 120 via molten polymer conduit 126 to a polymer finishing section (not shown) with an extruder (not shown). The high pressure separator 120 discharges separated volatile monomer-rich phase of unreacted monomer into the recycle gas system 124 at a pressure similar to pressurized gas discharged from the primary compressor 104. Unreacted monomer discharges from the recycle gas system 124 through recycle conduit 128 and is combined with monomer feed from the primary compressor 104 and discharged into the secondary compressor 110. Unreacted monomer from the low pressure separator 122 discharges into a pressure purge compressor 107 at a pressure above an intake pressure of the primary compressor 104. It will be understood that comonomer may be introduced at various positions in the process in a similar manner to the introduction of monomer.

In the process of polymerizing monomer, such as ethylene, in a tubular reactor, once the desired throughput of monomer through the secondary compressor 110 and into the reactor 102 is established, the pressure in the reactor is controlled by a high-pressure, let-down valve 130, through which the product mixture (polymer composition, unreacted monomer, and optionally unreacted comonomer) discharges from the tubular reactor 102. Opening the valve 130 decreases the pressure in the tubular reactor 102; closing the valve 130 increases the pressure in the tubular reactor 102. Moreover, a pressure drop exists along the length of the tubular reactor 102 which forces the reaction mixture along the reactor at a desired velocity (the term "reactor pressure" herein refers to the maximum pressure in the reactor 102, that is, the pressure immediately downstream of the secondary compressor 110, unless another meaning is obvious from the context).

As described herein, a chain transfer agent may be added at various positions in the process. Suitable chain transfer agents are described herein. Chain transfer agents may be added in each monomer feed. This may be achieved by mixing the chain transfer agent with the monomer feed before the monomer is compressed by the secondary compressor 110. Chain transfer agent may be added along the length of the tubular reactor 102, although it may be consumed unequally and so concentration variations along the tube may result. As shown in FIG. 1, a source of chain transfer agent 132 may be in fluid connection with the primary compressor 104 and hence distributed, after passing through the secondary compressor 110 to the different monomer feeds 116a, 116b, 116c spaced along the tube of tubular reactor 102. Alternatively, the source of chain transfer agent may be in direct fluid connection with the secondary compressor 110 so that chain transfer agent is supplied directly into the secondary compressor 110. A recycle conduit is in fluid communication with the low pressure separator 122 and the purge compressor 106. Recycle gas from the high pressure separator 120 may contain unconsumed chain transfer agent and can be passed to the intake of the secondary compressor 110. Thus, the chain transfer agent and monomer may form a single, common gas stream with the desired concentration of transfer agent for compression in the secondary compressor 110 and for supply to the various feed positions 116a, 116b, 116c along the tube of tubular reactor 102.

It will be understood that the present invention also applies to polymerization reactors comprising a combination of autoclave and tubular tail reactors. The polymerization system configuration is substantially the same as shown in FIG. 1 except that an autoclave reactor is located upstream of the tubular tail reactor and downstream of the secondary compressor. The secondary compressor feeds into the autoclave reactor rather than directly into the tubular tail reactor. The outlet stream of the autoclave reactor comprising polymer, unreacted monomer and optionally unreacted comonomer is fed into the tubular tail reactor. The tubular tail reactor may only comprise one initiator injection point and thus one reaction zone. Alternatively, the tubular tail reactor may comprise multiple initiator injection points and thus multiple reaction zones.

### Tubular Reactor

The reactor system according to the present invention comprises a tubular reactor. A tubular reactor is typically a continuous, plug flow loop reactor. A tubular reactor typically has an initial part to which the monomer(s) are fed from the secondary compressor and wherein they are heated to the desired reaction start temperature, usually to at least about 120 °C, or at least about 130 °C, or at least about 160 °C. Once the desired temperature is reached, polymerization initiator composition is injected at the initiator injection point(s) in the tubular reactor to start the reaction. The operational pressure of the tubular reactor is generally from about 1000 bar (100 MPa) to about 3500 bar (350 MPa).

Tubular reactors, such as tubular tail reactors, may comprise only one initiator injection point and thus have only one reaction zone. Alternatively, tubular reactors may comprise multiple initiator injection points defining multiple reaction zones. The injected initiator decomposes into free radicals, which start the polymerization. Further points for injecting the initiator composition are located downstream along the length of the reactor. Optionally, the reactor has a total of at least two, preferably at least three, more preferably at least four distinct injection points, thereby giving rise to at least two, at least three, or at least four, respectively, reaction zones. The number of initiator injection points and initiator zones may be no more than six. In each reaction zone the polymerization is conducted as previously described herein. Preferably, the tubular reactor will generally be equipped with at least one temperature regulated cooling jacket in each reaction zone. The reaction mixture in any reaction zone may be cooled by the cooling jacket through which water or another cooling fluid is circulated or a combination of the cooling jacket and introduction of a side stream of cooled monomer.

The tubular reactor may further comprise a cooling zone located adjacent to and downstream of a reaction zone. Optionally, each reaction zone is followed by a cooling zone. The cooling zone allows the temperature of the reaction mixture to be reduced before passing the reaction mixture to a further reaction zone or discharging the reaction mixture from the tubular reactor. The temperature of the cooling zone may be controlled by a jacket water system. Alternatively or additionally, one or more cool side-streams of monomer may be introduced along the length of the length of the reactor in a cooling zone to reduce the temperature of the reaction mixture within the cooling zone.

Optionally, the internal diameter of the tubular reactor may be in the range of from 20 mm to 120 mm, or from 40 mm to 80 mm, for example the internal diameter of the tubular reactor may be 85 mm. The internal diameter of the reactor is defined by the tubular reactor wall. Herein, the term `internal diameter of the tubular reactor refers to the diameter of the tubular reactor at the widest point along the length of the tubular reactor. In a polymerization reactor system in which a portion of the monomer discharged from the secondary compressor enters the tubular reactor as sidestreams, it may be desirable for the reactor to have regions of differing diameter increasing in stages down the length of the reactor as sidestreams enter. For example, for a process having a secondary compressor throughput of up to 180 tonnes/ hour at 3000 bar (300 MPa), 20% of which enters the front end of the tubular reactor and the rest enters as sidestreams, the tubular reactor may initially have a diameter in the range of 35 mm to 40 mm, and at the entry point of the first sidestream the diameter will increase, the increase being dependent on the size of that sidestream, and so on until after the last sidestream, the final diameter is in the region of 75 mm to 90 mm. In such a stepped tubular reactor, the internal diameter of the tubular reactor is the final diameter as that is the widest point along the length of the tubular reactor. The internal diameter of a tubular reactor chosen for any process according to the invention will be dependent upon the throughput of the secondary compressor, on the output pressure from the secondary compressor and on the length of the tubular reactor employed, all of which relate to the pressure drop experienced over the length of the reactor.

Optionally, the tubular reactor has a length in the range of from 200 m to 5000 m, more preferably from 1000 m to 4000 m, or from 3000 m to 4500 m. It will be understood that the length of the tubular reactor is the total length of the reactor including all reaction zones and all cooling zones of the tubular reactor.

In the method of polymerizing monomer, preferably ethylene, in a tubular reactor according to the present invention, once the desired throughput of monomer through the secondary compressor and into the reactor is established, the pressure in the reactor is controlled by the high-pressure, let-down valve, through which the product mixture exits the reactor. Opening the valve decreases pressure in the tubular reactor; closing the valve increases the pressure. Moreover, a pressure drop exists along the length of the tubular reactor which forces the reaction mixture along the reactor at a desired velocity (the term "reactor pressure" herein refers to the maximum pressure in the reactor, that is, the pressure immediately downstream of the secondary compressor, unless another meaning is obvious from the context). The pressure drop over the length of the reactor is dependent on the condition that the pressure should not fall below the point at which phase separation for the reaction mixture occurs. The pressure drop for a given throughput can be reduced by increasing the internal diameter of the tubular reactor. However, increased tube diameter also makes effective cooling of the reactor mixture more difficult.

The tubular reactor may be a tubular tail reactor. It will be understood that a tubular tail reactor is a type of tubular reactor that is connected to an autoclave reactor. The autoclave reactor is located upstream of the tubular tail reactor. The tubular tail reactor may have any feature described herein in relation to a tubular reactor. The outlet stream comprises the polymer produced in the autoclave reactor, unreacted monomer and optionally unreacted comonomer. The tubular tail reactor may have any feature described herein in relation to a tubular reactor.

Optionally, the polymerization reactor system disclosed herein comprises an autoclave and a tubular tail reactor. It may be that more than one autoclave is located upstream of the tubular tail reactor. It may be that more than one tubular tail reactor is located downstream of the autoclave reactor. A cold zone may be located between the autoclave and tubular tail reactor in which the temperature of the outlet stream of the autoclave is lowered to a desired temperature before being passed into the tubular tail reactor.

The tubular reactor may be equipped with at least one thermocouple probe to measure a temperature within the reactor. Suitable thermocouple probes are known to the skilled person. The flow rate of initiator and/or monomer, and optionally comonomer, into the reactor may be adjusted in response to the temperature within the reactor.

### Initiator injection line

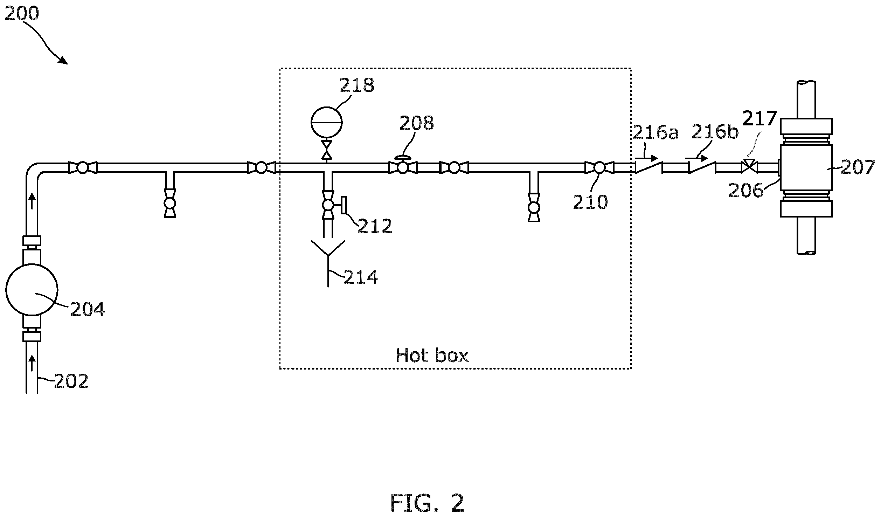

An initiator injection line according to the present invention will now be described with reference to FIG. 2. The initiator injection line 200, comprises an initiator injection pump (not shown, but in connection with conduit 202). An initiator cylinder 204 is located adjacent the pump. The initiator pump moves initiator from the initiator cylinder 204 to the outlet 206 of the initiator injection line. The outlet 206 is in the form of a sparger. The outlet 206 is fluidly connected to an initiator injection point of a tubular reactor 207. Therefore, initiator flows from the outlet 206 into the tubular reactor 207 at the initiator injection point. Although the initiator injection line shown in FIG. 2 has one outlet 206, it will be appreciated that the initiator injection line may comprise multiple outlets 206, with each outlet 206 connected to a separate initiator injection point of the tubular reactor 207.

The initiator injection line 200 further comprises a back-pressure valve 208. The back-pressure valve 208 is a control valve and has a set-pressure. The back-pressure valve 208 maintains the pressure within the initiator injection line 200 upstream of the back pressure valve 208 and downstream of the pump at the set-pressure.

In operation, initiator is pumped through the initiator injection line 200 to the outlet 206 and into the tubular reactor 207 at an initiator injection point. Initiator is injected into the tubular reactor 207 to initiate the polymerization reaction. The initiator flows through an opening (not shown) of a back-pressure valve 208 located downstream of the initiator pump and upstream of the outlet 206. The back-pressure valve 208 has a set-pressure which is selected to be in the range of from 50 bar to 400 bar greater than the pressure inside the tubular reactor 207 at the initiator injection point. The back-pressure valve 208 is a dynamic control valve and regulates the pressure upstream of the back-pressure valve 208 to be equal to the set-pressure by varying the flow rate of initiator through the back-pressure valve 208. The back-pressure valve 208 comprises a variable opening (not shown) and maintenance of the pressure upstream of the back-pressure valve 208 is achieved by varying the size of the opening of the back-pressure valve 208. In operation, the pressure upstream of the back-pressure valve 208 is greater than the pressure downstream of the back-pressure valve 208. The pressure upstream of the back-pressure valve 208 is also greater than the pressure within the tubular reactor 207 at the initiator injection point. The initiator is slightly compressed between the initiator pump and the back-pressure valve 208. The compressed initiator acts as a capacitance in the system. When the pump output dips momentarily, for example when the pump cylinder reaches the end of its stroke and changes direction, the compressed initiator expands slightly, making up for the loss in pump output. This ultimately results in a more constant and consistent flow rate of initiator into the tubular reactor 207 as the back-pressure valve 208 may smooth the pulsing output inherent to the initiator pump. As the initiator concentration within the reactor 207 controls the temperature within the reactor 207, more stable peak reactor temperatures may be achieved using the present initiator injection line 200.

The initiator injection line 200 further comprises a pressure transmitter 218 for measuring a pressure in the initiator injection line 200 upstream of the back-pressure valve 208. The pressure transmitter 218 measures the pressure in the initiator injection line 200 upstream of the back-pressure valve 208 and downstream of the pump and converts it to an analog signal for system control. When the pressure monitored by the pressure transmitter 218 exceeds the set-pressure of the back-pressure valve 208 by a pressure in the range of from 100 to 200 bar, it is indicative of a blockage within the initiator injection line 200. The back-pressure valve 208 is the narrowest part of the initiator injection line 200 and so is most prone to blockages. To alert the operator of the blockage, an alarm of an alarm system (not shown) may be triggered.

A shut-off valve 210 is located upstream of the outlet 206 and downstream of the back-pressure valve 208. In normal operation the shut-off valve 210 is open. However, the shut-off valve 210 may be closed, preferably by a control system, to prevent initiator from entering the tubular reactor 207, for example in the event of a blockage within the initiator injection line 200. Closing the shut-off valve 210 when a blockage may be present in the initiator injection line 200 prevents a surge of initiator from entering the tubular reactor 207 if the blockage becomes dislodged.

A dump valve 212 is located upstream of the back-pressure valve 208 and is in fluid communication with a waste tank 214. The dump valve 212 allows initiator to be diverted into the waste tank 214. In normal operation, dump valve 212 is closed. However, if it is desired to empty the initiator injection line 200 of initiator, for example, after shut-off valve 210 is closed, the dump valve 212 may be opened. Preferably, there is a time delay between closing shut-off valve 210 and opening dump valve 212 of at least 1 second and optionally no longer than 2 minutes.

The back-pressure valve 208, shut-off valve 210, dump valve 212, connection to waste tank 214 and pressure transmitter 218 may all be located within a hot box.

The initiator injection line 200 further comprises two check valves 216a, 216b for preventing back-flow into the initiator injection line 200. The two check valves 216a, 216b prevent back-flow from the tubular reactor 207 once the shut-off valve 210 is closed.

The initiator injection line 200 comprises a three-way valve 217 located downstream of the back-pressure valve 208 and upstream of the outlet 206. FIG. 2 shows the three-way valve 217 located downstream of the two check valves 216a, 216b. The three-way valve 217 comprises a first port for receiving initiator, a second port for directing initiator to the outlet, and a third port connected to waste tank 214 (connection not shown). Waste tank 214 is also in fluid connection with dump valve 212 but it will be understood that multiple waste tanks 214 may be provided. In a first configuration of the three-way valve 217, the direction of flow is from the first port to the second port of the three-way valve 217. In a second configuration, the direction of flow is from the first port to the third port of the three-way valve 217. In normal operation, the three-way valve 217 is in the first configuration and initiator flows from the initiator source, through the initiator injection line to the initiator injection point of the tubular reactor 207. If a blockage occurs in the initiator injection line 200, the three-way valve 217 may be changed from the first configuration to the second configuration. That allows initiator flow to be diverted to the waste tank 214. The initiator injection line may also be flushed with solvent by passing solvent through the initiator injection line 200 and to the waste tank 214 via the three-way valve 217 when the three-way valve 217 is in the second configuration.

The three-way valve 217 may alternatively be replaced by two single valves configured to aid flushing of the line in the same way as a three-way valve. One of the two single valves is configured to control flow from the initiator source 202 to the outlet 206 and may be used to isolate the initiator injection line from the tubular reactor. The second of the two single valves allows the initiator injection line to be flushed and directed to waste tank 214.

### Polymerization Initiator and Initiator Composition

Initiators are used to initiate the free radical polymerization of monomer, preferably ethylene and optionally comonomer(s). Suitable initiators are organic peroxides. Usually, mixtures of different peroxides are used, the so-called "peroxide cocktails". Such a mixture of several peroxide initiators typically includes peroxides having different half-life times: generally ones that are active at the lowest temperature required for the given reaction start temperature (from about 120 °C to about 160 °C) and ones that are active at the highest temperature (up to about 335 °C) for the desired maximum temperature. Selection of an appropriate combination of different peroxides depends on the reactor-setup and the desired reaction temperature profile along the length of the reactor, and is within the general knowledge of a skilled person.

Organic peroxides useful as polymerization initiators are widely known in the art. Classes of peroxide initiators that are particularly useful for the present invention are, for example, the following: diacyl peroxides, dialkyl peroxydicarbonates, tert-alkyl peroxyesters, OO-tert-alkyl O -alkyl monoperoxycarbonates, di-tert-alkyl peroxides, di(tert-alkylperoxy)ketals, tert-alkyl hydroperoxides, and ketone peroxides.

Non-limiting examples of useful peroxides are, e.g. the following: dibenzoyl peroxide, dilauroyl peroxide, succinic acid peroxide, diisononanoyl peroxide, dioctanoyl peroxide, tertbutylperoxybenzoate, tert-butylperoxyacetate, tert-butylperoxymaleate, tert-butyl 2-ethylperoxyhexanoate, tert-butyl peroxy-3,5,5-trimethylhexanoate, tert-amyl 2-ethylperoxyhexanoate, 2,5-di(2-ethylhexanoyl-peroxy)2,5-di-methyl-hexane, tertbutylperoxypivalate, alpha-cumyl peroxyneoheptanoate, 3-hydroxy- 1,1-dimethylbutyl peroxyneodecanoate, OO-tert-butyl-O-(isopropyl)monoper-oxycarbonate, OO-tert-amyl-O-(2-ethylhexyl)monoperoxy-carbonate, ethyl-3,3-di(tert-amylperoxy)butyrate, n-butyl-4, 4-di(tertbutylperoxy)valerate, 1,1-di(tert-butylperoxy) cyclohexane, 2,2-di(tert-butylperoxy)butane, 1,1-di(tert-amylperoxy)cyclohexane, 2,5-di-(tert-butylperoxy)-2,5-dimethyl-3-hexyne, 2,5-di-(tert-butylperoxy)-2,5-dimethyl-hexane, 2,5-di(tert-butylperoxy)-2,5-dimethylhexane, 1,3 (4)-bis(2-(tert-butyl-peroxy)-1-methylethyl)-benzene, di(tert-butyl)peroxide (DTBP), di(tert-amyl)peroxide, dicumylperoxide, tert-butyl cumyl peroxide, tert-butyl peroxyisopropylcarbonate, tert-butyl peroxyisobutyrate, di(n-propyl)peroxydicarbonate, di(secbutyl)peroxydicarbonate, di(2-ethylhexyl)peroxydicarbonate, di(n-hexadecyl)peroxydicarbonate, di(4-tert-tylcyclohexyl)peroxydicarbonate, tert-butylhydroperoxide, tertamylhydroperoxide, alpha-cumylhydroperoxide, 2,5-dihydroperoxy-2,5-dimethyl-hexane, para-menthane hydroperoxide, mlp-isopropyl-al-pha-cumyl hydroperoxide. Such peroxides are marketed for example under the trade names TrigonoxTM and PerkadoxTM by Nouryon, or LuperoxTM by Arkema.

Preferred initiator mixtures, especially for tubular reactors contain a minimum of one and up to eight different types of initiators. Suitable mixtures of different organic peroxides, commonly referred to as peroxide cocktails, are known to those skilled in the art.

Optionally, the initiator (or initiator mixtures) may be injected into different reaction zones in the same initiator composition. The polymerization initiator composition used herein comprises at least one, preferably several, polymerization initiators as described above, dissolved in an organic solvent, as further described below, and optionally one or more additional modifiers, also as further described below.

Suitable organic solvents can include but are not limited to one or more noncoordinating, inert liquids including, but not limited to, straight and branched-chain hydrocarbons such as propane, isobutane, butane, n-butane, pentane, isopentane, hexanes, isohexane, heptane, octane, n-octane, dodecane, isododecane, and mixtures thereof; cyclic and alicyclic hydrocarbons such as cyclohexane, cycloheptane, methylcyclohexane, methylcycloheptane, and mixtures thereof such as can be found commercially (IsoparsTM from ExxonMobil); perhalogenated hydrocarbons such as perfluorinated C4 to C10 alkanes, chlorobenzene, and aromatic and alkylsubstituted aromatic compounds such as benzene, toluene, mesitylene, and xylene. Suitable solvents also include liquid olefins which may act as monomers or comonomers including ethylene, propylene, 1-butene, isobutylene, 1-hexene, 1-pentene, 3-methyl- 1-pentene, 4-methyl-i -pentene, 1-octene, and 1-decene. In certain embodiments, the initiator can include butane, n-butane, n-octane, or a mixture of one or more C9 to C12 paraffinic hydrocarbons.

The peroxide initiators (or initiator mixtures) may constitute from about 5 to about 50 wt % of the polymerization initiator composition, preferably from about 5 to about 40 wt %, more preferably from about 10 to about 40 wt %.

Optionally, in case an additional modifier (different from the initiator solvent) is used, such additional modifier as described above may be added to the reactor together with the monomer feed, or via one or more separate injection points. The amount of the transfer agent can be up to the concentration in the reaction mixture required to control the melt index of the product up to the required specification.

Preferably, the organic solvent as described above constitutes from about 50 to about 95 wt % of the entire solution comprising the peroxide(s) in the organic solvent, more preferably from about 65 to about 85 wt %, and most preferably from about 70 to about 85 wt %.

Based on the monomer feed (preferably ethylene and optionally comonomer(s)), the one or more polymerization initiator(s) constitute from about 30 to about 1500 weight ppm, preferably from about 50 to about 1000 weight ppm.

The organic solvent in which the initiator is dissolved may be used in an amount corresponding to about 100 to about 5000 weight ppm, preferably about 250 to about 3000 weight ppm, with respect to the monomer feed.

The polymerization initiator compositions according to the present invention may further contain conventional additives, such as radical scavengers to stabilize the initiator composition during storage.

### Chain transfer agent

The process of the present invention preferably involves use of a chain transfer agent. The terms "chain transfer agent", also used interchangeably herein as "modifier", refer to a component that can be added to the polymerization process to control the molecular weight of the polymer by promoting chain transfer.

Examples of modifiers may include, but are not limited to, tetramethylsilane, cyclopropane, sulfur hexafluoride, methane, t-butanol, perfluoropropane, deuterobenzene, ethane, ethylene oxide, 2,2-dimethylpropane, benzene, dimethyl sulfoxide, vinyl methyl ether, methanol, propane, 2-methyl-3-butene-2-ol, methyl acetate, t-butyl acetate, methyl formate, ethyl acetate, butane, triphenylphosphine, methylamine, methyl benzoate, ethyl benzoate, N,N-diisopropylacetamide, 2,2,4-trimethylpentane, n-hexane, n-butane, isobutane, dimethoxymethane, ethanol, n-heptane, n-butyl acetate, cyclohexane, methylcyclohexane, 1 ,2-dichlorethane, acetonitrile, N-ethylacetamide, propylene, 1-butene, n-decane, N,N-diethylacetamide, cyclopentane, acetic anhydride, n-tridecane, n-butyl benzoate, isopropanol, toluene, hydrogen, acetone, 4,4-dimethylpentene-1, trimethylamine, N,N-dimethylacetamide, isobutylene, n-butyl isocyanate, methyl butyrate, n-butylamine, N,N-dimethylformamide, diethyl sulfide, diisobutylene, tetrahydrofuran, 4-methylpentene- 1, p-xylene, p-dioxane, trimethylamine, butene-2, 1-bromo-2-chloroethane, octene- 1,2-methylbutene-2, cumene, butene-1, methyl vinyl sulfide, n-butyronitrile, 2-methyl-butene-1, ethylbenzene, n-hexadecene, 2-butanone, n-butyl isothiocyanate, methyl 3-cyanopropionate, tri-n-butylamine, 3-methyl-2-butanone, isobutyronitrile, di-n-butylamine, methyl chloroacetate, 3-methylbutene-1, 1,2-dibromoethane, dimethylamine, benzaldehyde, chloroform, 2-ethylhexene-1, propionaldehyde, 1,4-dichlorobutene-2, tri-n-butylphosphine, dimethylphosphine, methyl cyanoacetate, carbon tetrachioride, bromo trichloromethane, di-n-butylphosphine, acetaldehyde, proprionaldehyde, and phosphine. Further details and other suitable transfer agents are described in Advances in Polymer Science, Vol. 7, pp. 386-448 (1970).

Optionally, the polyethylene produced by the apparatus described herein or according to the process as described herein contains one or more C2 to C12 unsaturated modifiers. The C2 to C12 unsaturated modifiers contain at least one unsaturation, but can also contain multiple conjugated or non-conjugated unsaturations. In case of multiple unsaturations, it is preferred that they are non-conjugated. Optionally, the unsaturation of the C2 to C12 unsaturated modifier can be di-substituted with one or more alkyl groups in the beta position. Preferred C2 to C12 unsaturated modifiers include propylene, isobutylene, or a combination thereof. The amount of the modifier(s) can range of from a low of about 0.001 wt%, 0.01 wt%, 0.1 wt %, 0.3 wt %, or 0.8 wt % to a high of about 3.0 wt %, 6.0 wt %, or 10.0 wt %, based on the total weight of the polyethylene. Optionally, when the tubular reactor is a tubular tail reactor provided in combination with an autoclave reactor, less than 1 wt%, less than 0.1 wt% or less than 0.01 wt% modifier is present. It may be that no modifier is present.

The chain transfer agent may be added into the reaction mixture in any suitable way. It may be comprised in the polymerization initiator composition. Alternatively, the modifier may be injected into the monomer feed, such as into the inlet pipes feeding the secondary compressor. As the modifier is, in general, not fully consumed during one pass through the reactor, it is generally also present at a certain amount in the recycle ethylene returning to the secondary compressor.

### Monomer and Comonomer

Preferably, the monomer is an olefin. Preferably the monomer is ethylene and the resulting polymer is a polyethylene polymer.

The process of the invention may not only be used for the manufacture of ethylene homopolymers, but also ethylene copolymers. Such comonomer(s) will be pressurized and injected into the primary and/or secondary compressor and then fed into the polymerization reactor together with monomer, preferably ethylene.

Typical comonomers include, without limitation: vinyl ethers such as vinyl methyl ether, vinyl n-butyl ether, vinyl phenyl ether, vinyl beta-hydroxy-ethyl ether, and vinyl dimethylamino-ethyl ether; olefins such as ethylene, propyl-ene, butene-1, cis-butene-2, transbutene-2, isobutylene, 3,3-dimethylbutene-1,4-methylpentene-1, hexane-1, octene-1, and styrene; vinyl-type esters such as vinyl acetate, vinyl butyrate, vinyl pivalate, and vinylene carbonate; haloolefins such as vinyl fluoride, vinylidene fluoride, tetrafluoroethyl-ene, vinyl chloride, vinylidene chloride, tetrachloroethylene, and chlorotrifluoroethylene; acrylic-type esters such as methyl acrylate, ethyl acrylate, n-butyl acrylate, t-butyl acrylate, 2-ethylhexyl acrylate, alpha-cyanoisopropyl acrylate, beta-cyanoethyl acrylate, o-(3-phenylpropan-1,3,-dio-nyl)phenyl acrylate, methyl methacrylate, n-butyl methacrylate, t-butyl methacrylate, cyclohexyl methacrylate, 2-ethylhexyl methacrylate, methyl methacrylate, glycidyl methacrylate, beta-hydroxethyl methacrylate, beta-hydrox-propyl methacrylate, 3-hydroxy-4-carbo-methoxy-phenyl methacrylate, N,N-dimethylaminoethyl methacrylate, t-butylaminoethyl methacrylate, 2-(1 -aziridinyl)ethyl methacry-late, diethyl fumarate, diethyl maleate, and methyl crotonate; other acrylic-type derivatives such as acrylic acid, methacrylic acid, crotonic acid, maleic acid, methyl hydroxy, maleate, itaconic acid, acrylonitrile, fumaronitrile, N,N-dimethylacrylamide, N-isopropylacrylamide, N-t-butylacrylamide, N-phenylacrylamide, diacetone acrylamide, methacrylamide, N-phenylmethacrylamide, N-ethylmaleimide, and maleic anhydride; and other compounds such as allyl alcohol, vinyltrimethylsilane, vinyltriethoxysilane, N-vinylcarbazole, N-vinyl-N-methylacetamide, vinyldibutylphosphine oxide, vinyldiphenylphosphine oxide, bis-(2-chloroethyl) vinylphosphonate and vinyl methyl sulfide.

Examples of preferred comonomers are vinyl acetate, methyl acrylate, methacrylic acid, ethyl acrylate, n-butyl acrylate or acrylic acid, or mixture thereof.

In some comonomer-containing polyethylenes, the amount of comonomer is below 10 wt %, but may also be 5 wt % or lower, 3 wt % or lower, or even 1 .5 wt % or lower. In other comonomer-containing polyethylenes, the amount of comonomer may however be 10 wt % or higher, such as 15, 20, 30, or 40 wt % or higher, depending on the desired end-use of the polymer.

Generally, the purity of the ethylene feed suitable for use in the processes according to the present invention is as provided by state-of-the-art steam crackers. In order not to interfere with the radical initiation reaction, the oxygen content in the feed should be below 5 ppm.

### Polymerization Conditions

As used herein, the terms "polymerization temperature" and "reactor temperature" are interchangeable. Reactor temperature refers to the peak temperature in the reactor, or if multiple reaction zones are present, the peak temperature in each reaction zone. It will be understood that the peak temperature in a reaction zone may be the same as, or different to the peak temperature in another reaction zone.

In a method of preparing a polymer according to the present invention, the high pressure polymerization conditions comprise reactor temperatures from about 120 °C to about 335° C. The peak temperature for each reaction zone may advantageously be in the range of from 170 °C to 350 °C. For example, in at least one reaction zone the peak temperature may be in the range of from 170 °C to 250 °C, from 280 °C to 340 °C, from 290 °C to 315 °C. It will be understood that the temperature of the reaction zone may be chosen depending on the specific grade of polymer being produced and type of reactor. For example, in tubular tail reactors the peak temperature in a reaction zone may be no greater than 170 °C. The increase in temperature in a reaction zone is proportional to the amount of polymer made in that reactor zone and so operating at high peak temperatures favors high conversion. However, the kinetics of ethylene polymerization are such that as the temperature rises, chain transfer to polymer increases relative to propagation of linear chains and the polydispersity index increases, resulting in an increase in the haze value of the polymer produced. Accordingly, the temperature may be selected in consideration of the desired polymer product properties. Optionally, in each reaction zone upstream of an initiator injection point (i.e., in all but the last reaction zone) the reaction mixture is cooled to at least 10 °C, at least 20 °C, more preferably to at least 40 °C, and most preferably to at least 50 °C, below the peak temperature of that reaction zone before the reaction mixture reaches the next initiator injection point.

The high pressure polymerization conditions comprise reactor operational pressures from about 1000 bar (100 MPa) to about 3500 bar (350 MPa). The proportion of the total monomer which enters the tubular reactor, whether in the front end stream or as a sidestream, which is converted to polymer before exiting the reactor is referred to as the conversion. In the process of the invention, the conversion is at least 18%, for example at least 28%. The conversion achieved is in part related to the pressure at which the reactor operates, with a higher front end pressure both increasing the rate of polymerization and making possible a greater pressure drop over the length of the reactor. However, operating at higher pressures imposes more strain upon the secondary compressor and also increases the energy consumption with a consequent cost disadvantage. For such reasons, it may be desirable in some instances to operate at a pressure of from 1000 bar (100 MPa) to 2800 bar (280 MPa) at a relatively low conversion, which may be, for example, approximately in the region of from 18% to 32%. Alternatively, it may be desirable to operate at a pressure in the region of 2300 bar (230 MPa) to 3100 bar (310 MPa) at a high conversion, for example, in the range of from 28% to 37%. However, pressure is only one of the factors which influence conversion and overall a conversion in the region of from 30% to 40% is preferred, with a more preferred range being from 30% to 37%.

### Polymer Product

It will be understood that the term "polymer" may be used to refer to homopolymers, copolymers, interpolymers, terpolymers, etc. A "polymer" has two or more of the same or different monomer units. A "homopolymer" is a polymer having monomer units that are the same. A "copolymer" is a polymer having two or more monomer units that are different from each other. The term "different" as used to refer to monomer units indicates that the monomer units differ from each other by at least one atom or are different isomerically. As used herein, the terms "polyethylene," "ethylene polymer," and "ethylene copolymer" mean a polymer or copolymer comprising at least 50 mol % ethylene units (preferably at least 70 mol % ethylene units, more preferably at least 80 mol % ethylene units, even more preferably at least 90 mol % ethylene units, even more preferably at least 95 mol % ethylene units or 100 mol % ethylene units (in the case of a homopolymer such as hompolyethylene).

As used herein, when a polymer or copolymer is referred to as including an olefin, the olefin present in such polymer or copolymer is the polymerized form of the olefin. For example, when a copolymer is said to have an "ethylene" content of 45 wt.% to 65 wt.% and a comonomer content of 35 wt% to 55 wt%, it is understood that the mer unit in the copolymer is derived from ethylene in the polymerization reaction and said derived units are present at 35 wt.% to 55 wt.%, based upon the weight of the copolymer. A copolymer can be higher order copolymers such as terpolymers, quaterpolymers, and the like.

As used herein, unless specified otherwise, percent by mole is expressed as "mol %," and percent by weight is expressed as "wt %." Comonomer content in the polymer composition is based on the total content of all monomers in the polymer.

Preferably, the initiator injection line, reactor system and method according to the present invention are suitable for preparing a polyethylene composition. The final polymer product (preferably homo-polyethylene or copolymer of ethylene and one or more of the abovelisted comonomers) produced by the apparatus or according to the process as described herein include a wide range of low density polyethylenes (LDPE) that can be made using radical initiated high pressure processes with tubular or autoclave reactors. Generally, for a homopolymer LDPE the densities range between about 0.910 and 0.935 g/cm³, the polydispersities between about 5 and about 50, the melt index between about 0.1 and about 500 g/min, and the haze values between about 1 and 20. If desired, high comonomer contents can be realized, e.g. up to about 40 wt % comonomer. The molecular weight of the polymer can be modified by using different types and concentrations of modifier. The polymer density may be influenced by the type and amount of comonomer, and the polymerization temperature. Further, haze can be influenced by the reactor temperature, as well as the reactor pressure and the choice of the polymerization initiator. The main applications of these LDPE grades are in films and in extrusion coating. Optionally, the polymer comprises 50 wt% or more of monomer, 70 wt% or more of monomer, 80 wt% of weight or more of monomer, 95 wt% or more of monomer, or 100 wt% monomer (in the case of a homopolymer). For example, when the monomer is ethylene, the polymer may comprise 50 wt% or more of ethylene, 70 wt% or more of ethylene, 80 wt% of weight or more of ethylene, 95 wt% or more of ethylene, or 100 wt% ethylene (in the case of a homopolyethylene). It will be understood that the remaining wt% of the copolymer will correspond to the wt% of one or more comonomers.

Further, polyethylene compositions may be blends of LDPE and other polymers, such as additional polymers prepared from ethylene monomers. Exemplary additional polymers are LLDPE (e.g., LLDPE homopolymers and/or copolymers of ethylene and alphaolefin(s)), non-linear LDPE, very low density polyethylene ("VLDPE"), medium density polyethylene ("MDPE"), high density polyethylene ("HDPE"), differentiated polyethylene ("DPE"), and combinations thereof. DPE copolymers include EVA, EEA, EMA, EnBA, and other specialty copolymers.

### Polymerization method

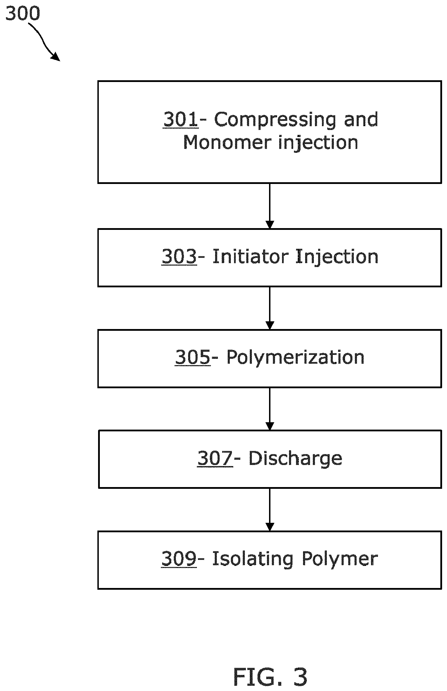

The present invention provides a method of preparing a polymer, preferably a polyethylene polymer, in a polymerization reactor system also according to the present invention. With reference to FIG. 3, the method 300 comprises a first step 301 in which monomer from the monomer source, and optionally a comonomer, are pressurized in the primary and secondary compressors of the polymerization reactor system. The monomer and optional comonomer is then injected into the tubular reactor. In a second step 303, the method 300 comprises operating the initiator pump to pump initiator from the initiator source through the back-pressure valve and into the tubular reactor at the initiator injection point. The back-pressure valve is operated at a set pressure which is in the range of from 50 bar to 400 bar greater than the pressure within the tubular reactor at the initiator injection point. The back-pressure valve maintains the pressure in the initiator injection line upstream of the back-pressure valve and downstream of the initiator pump at the set-pressure. In a third step 305, monomer, preferably ethylene, is polymerized in the tubular reactor to form the polymer, preferably polyethylene. In a fourth step 307, the product mixture comprising the polymer and unreacted monomer is discharged from the tubular reactor through the pressure let-down valve. In a fifth step 309, the polymer is isolated from the product mixture, for example by passing the product mixture through at least one separation vessel.

A method according to the present invention may be performed as a continuous process. In a continuous process, at least some of steps 301, 303, 305, 307 and 309 are performed simultaneously. Preferably, all of steps 301, 303, 305, 307 and 309 are performed simultaneously.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of preparing a polymer in a polymerization reactor system, the polymerization reactor system comprising a tubular reactor, a monomer source, a primary compressor, a secondary compressor, a pressure let-down valve, an initiator source, and an initiator injection line;
wherein the initiator injection line comprises:
an initiator pump and an outlet located downstream of the pump, wherein the outlet is connected to the tubular reactor at an initiator injection point, and wherein the pump is configured to pump initiator from the initiator source through the outlet and into the tubular reactor at the initiator injection point;
the initiator injection line further comprising a back-pressure valve located downstream of the initiator pump and upstream of the outlet, wherein the back-pressure valve has a set-pressure and is configured to maintain a pressure within the initiator injection line upstream of the back-pressure valve and downstream of the initiator pump that is equal to the set-pressure;
wherein the method comprises the steps of:
(i) pressurizing monomer from the monomer source in the primary and secondary compressors and introducing the monomer into the tubular reactor;
(ii) operating the initiator pump so that initiator from the initiator source flows through the back-pressure valve and into the tubular reactor at the initiator injection point;
(iii) polymerizing the monomer in the tubular reactor to form the polymer;
(iv) discharging a product mixture comprising the polymer from the tubular reactor through the pressure let-down valve; and,
(v) isolating the polymer;
wherein step (ii) further comprises operating the back-pressure valve at the set-pressure, wherein the set-pressure is in the range of from 50 bar to 400 bar greater than the pressure of the tubular reactor at the initiator injection point.

2. The method of claim 1, wherein the set-pressure is in the range of from 100 bar to 300 bar greater than the pressure of the tubular reactor at the initiator injection point.

3. The method according to claim 1 or claim 2, wherein the polymerization reactor system further comprises a control system configured to reduce the flow rate of the initiator through the outlet when the pressure in the initiator injection line between the initiator pump and the back-pressure valve is equal to a first set-point pressure, wherein the first set-point pressure is a pressure within the range of from 100 bar to 200 bar greater than the set-pressure of the back-pressure valve.

4. The method according to claim 3, wherein the initiator injection line further comprises a shut-off valve located upstream of the outlet and downstream of the back-pressure valve; and wherein the control system is configured to close the shut-off valve when the pressure in the initiator injection line between the initiator pump and the back-pressure valve equals a second set-point pressure, wherein the second set-point pressure is a pressure within the range of from 200 bar to 600 bar greater than the set-pressure of the back-pressure valve.

5. The method according to claim 4, wherein the initiator injection line further comprises a dump valve located upstream of the back-pressure valve, and a waste tank; and wherein the control system is configured to open the dump valve to divert initiator to the waste tank when the pressure in the initiator injection line between the initiator pump and the back-pressure valve equals the second set-point pressure, optionally the control system is configured to open the dump valve no less than 1 second after the shut-off valve is closed.

6. The method according to any preceding claim, wherein the initiator injection line has multiple outlets and the tubular reactor comprises multiple initiator injection points, and wherein each of the multiple outlets is connected to any one of the multiple initiator injection points provided that each of the multiple initiator injection points is connected to no more than one of the multiple outlets; and,
wherein step (ii) of the method further comprises operating the initiator pump so that initiator from the initiator source flows through the back-pressure valve and into the tubular reactor at the multiple initiator injection points.

7. The method of any preceding claim, wherein the polymerization reactor system further comprises an autoclave reactor upstream of the tubular reactor, and wherein the tubular reactor is a tubular tail reactor configured to receive an outlet stream from the autoclave reactor, wherein the outlet stream comprises a polymer and unreacted monomer.

8. The method according to any preceding claim, wherein the monomer is ethylene and the polymer is a polyethylene polymer.

9. An initiator injection line for use in the method according to any one of claims 1 to 8, wherein the back-pressure valve of the initiator injection line has an adjustable opening for controlling the pressure upstream of the back-pressure valve;
wherein the size of the opening is adjustable to maintain the pressure in the initiator injection line upstream of the back-pressure valve and downstream of the initiator pump equal to the set-pressure of the back-pressure valve.

10. The initiator injection line of claim 9, wherein the outlet of the initiator injection line is in the form of a sparger.

11. The initiator injection line of claim 9 or claim 10, wherein the initiator injection line further comprises at least one check valve located upstream of the initiator injection outlet and downstream of the back-pressure valve, optionally wherein the at least one check valve is no more than 1000 mm upstream of the outlet.

12. The initiator injection line according to any one of claims 9 to 11, further comprising a three-way valve located downstream of the back-pressure valve and upstream of the outlet, wherein the three-way valve comprises a first port for receiving initiator, a second port for directing initiator to the outlet, and a third port connected to a waste tank, and wherein the three-way valve is operable in a first configuration in which the direction of flow is from the first port to the second port, and a second configuration in which the direction of flow is from the first port to the third port.

13. The initiator injection line according to any one of claims 9 to 12, wherein the initiator pump is in the range of from 5 m to 100 m upstream of the back-pressure valve, optionally wherein the initiator pump is in the range of from 10 m to 50 m upstream of the back-pressure valve.

14. The initiator injection line according to any one of claims 9 to 13, wherein the outlet is in the range of from 1 m to 100 m downstream of the back-pressure valve, optionally wherein the outlet is in the range of from 5 m to 40 m downstream of the back-pressure valve.

15. A polymerization reactor system comprising the initiator injection line according to any one of claims 9 to 14, for use in the method according to any one of claims 1 to 8.
